# EUROPÄISCHE PATENTSCHRIFT

(11) **EP 1 957 346 B1**
(45) Veröffentlichungstag und Bekanntmachung des Hinweises auf die Patenterteilung: **25.11.2009**
(21) Anmeldenummer: 06829302.6
(22) Anmeldetag: 05.12.2006
(51) Int. Cl.: B62D 25/08

(54) **FRONTENMODUL FÜR EIN KRAFTFAHRZEUG MIT EINER ENERGIEABSORBIERENDEN SCHUTZFUNKTION FÜR EIN KÜHLMODUL**
FRONT END MODULE FOR A MOTOR VEHICLE HAVING AN ENERGY-ABSORBING PROTECTIVE FUNCTION FOR A COOLING MODULE
MODULE D'EXTREMITE AVANT D'UN VEHICULE AUTOMOBILE, DOTE D'UNE FONCTION DE PROTECTION ET D'ABSORPTION D'ENERGIE POUR UN MODULE DE REFROIDISSEMENT

(30) Priorität: 05.12.2005 DE 102005058180
(43) Veröffentlichungstag der Anmeldung: 20.08.2008
(73) Patentinhaber: PEGUFORM GMBH, 79268 Bötzingen (DE)
(72) Erfinder: BREISACHER, Michael, MI 48307 Rochester Hills (DE); RINDERLIN, Jürgen, 79279 Vörstetten (DE)
(74) Vertreter: Neunert, Peter Andreas
(86) Internationale Anmeldenummer: PCT/EP2006/011658
(87) Internationale Veröffentlichungsnummer: WO 2007/065629

(56) Entgegenhaltungen:
- EP-A1- 1 232 931
- WO-A-2004/058543
- DE-A1- 10 051 567
- DE-A1- 19 850 590

## Beschreibung

Die Erfindung bezieht sich auf ein Frontendmodul für ein Kraftfahrzeug gemäß Oberbegriff des Anspruchs 1 sowie auf ein Kraftfahrzeug mit einem derartigen Frontendmodul.

Es ist allgemein bekannt, Kraftfahrzeuge mit Frontendmodulen zu versehen, welche im Falle einer Kollision Energie gezielt so absorbieren, dass funktionelle Bauteile im Frontbereich des Fahrzeugs nicht beschädigt werden. Funktionelle Bauteile im Frontbereich, wie z.B. Kühlmodule etc., sind üblicherweise an Trägerelementen befestigt, die gleichzeitig mit der Karosserie verbunden sind und dabei auch Karosserieteile wie z.B. Stoßfänger, tragen können.

Im Falle einer Kollision im Frontbereich dringt in der Regel der Stoßfänger mitsamt des Stoßfängerträgers in den Motorraum ein, wobei es insbesondere leicht zur Beschädigung des Kühlmoduls kommen kann. Beim Versicherungscrash (16 km/h) besteht nun die Forderung, dass zumindest das Kühlmodul nicht beschädigt werden darf.

In der DE 198 50 590 A1 wird ein Vorbaubereich für ein Kraftfahrzeug beschrieben, bei dem das Kühlmodul an wenigstens zwei Lagerpunkten mit den Trägerelementen des Vorbaubereichs verbunden ist. Dabei sind die wenigstens zwei Lagerpunkte so ausgeführt, dass sie bei einer aufprallbedingten Deformation des Frontendmoduls eine kraftübertragende und kraftaufnehmende Einbindung des Kühlmoduls in die Deformationscharakteristik des Vorbaubereiches bewirken. Diese Anordnung hat den Nachteil, dass der Kühler selber die Kräfte beim Aufprall direkt übernimmt; wodurch es leicht zur Beschädigung des Kühlers kommen kann.

In der DE 102 60 793 A1 wird eine Crashbox für ein Kraftfahrzeug beschrieben, an der Halterungselemente befestigt sind, an denen wiederum Bauteile, wie z.B. Kühler, angeordnet sein können. Die Crashbox hat die Funktion im Falle einer Kollision die Energie aufzunehmen und zu absorbieren. Der Nachteil dieser Anordnung liegt darin, dass das Kühlmodul direkt mit der Crashbox verbunden ist, so dass es zu Beschädigungen des Kühlmoduls kommt, wenn die Crashbox nicht mehr in der Lage ist, die gesamte Energie des Aufpralls zu absorbieren.

In der DE 100 51 567 A1 wird eine vordere Endstruktur eines Fahrzeugs beschrieben, bei der der Kühler so an den Trägerelementen des Frontendmoduls befestigt ist, dass er im Falle einer Kollision nach hinten wegklappen kann. Ein Nachteil dieses Klappmechanismus besteht darin, dass relativ viel Platz beansprucht wird, um den Kühler vor einer Beschädigung zu sichern, zudem wird das Trägerelement des Frontendmoduls undefiniert zerstört.

In der JP-A-10-264856 wird eine Fahrzeugendstruktur beschrieben, die in einer vorderen Endwand eine dünn ausgebildete Bruchkerbe aufweist, die leicht durch eine äußere Kraft zerbrochen werden kann, wenn die äußere Kraft einen vorbestimmten Wert überschreitet. Dadurch können zwar Bauteile im Falle einer Kollision im Frontbereich gesichert werden, jedoch besteht die Gefahr, dass diese Teile aus dem Motorraum heraus auf die Straße fallen und beschädigt werden.

Die EP 1 232 931 A1, die den Oberbegriff des Anspruchs 1 definiert, beschreibt eine reparaturfreundliche Frontstruktur für ein Kraftfahrzeug, wobei das Kühlmodul so an einem Abschirmblech befestigt ist, dass es im Falle eines Frontalzusammenstoßes nach hinten verschoben und somit geschützt werden kann. Dabei handelt es sich um eine relativ komplizierte Anordnung, bei der eine Vielzahl von Bauteilen aufeinander abgestimmt werden müssen.

Der vorliegenden Erfindung lag deshalb das Problem zugrunde, durch konstruktive Maßnahmen im Bereich des Frontendmoduls eines Kraftfahrzeugs die Energieabsorption im Falle einer Kollision weiter zu verbessern und eine Fahrzeugstruktur zu entwickeln, die die Nachteile des Standes der Technik nicht aufweist und einen verbesserten Schutz des Kühlmoduls gewährleistet.

Dieses Problem wird bei einem gattungsgemäßen Frontendmodul durch die kennzeichnenden Merkmale des Anspruchs 1 gelöst. Vorteilhafte Ausführungsformen sind Gegenstand der Unteransprüche.

Die Erfindung basiert auf der Idee, dass ein Bauelement, wie z.B. ein Kühlmodul, im Frontbereich des Kraftfahrzeugs an einem Bereich des Trägerelements befestigt wird, der verschoben werden kann, wenn eine äußere Kraft, die größer ist als ein vorbestimmter Wert, auf diesen Bereich einwirkt. Gleichzeitig bleibt jedoch mindestens ein Befestigungszustand des Bauteils mit dem Trägerelement erhalten, wodurch sichergestellt wird, dass das verschobene Bauteil nicht aus dem Motorraum auf die Straßenfläche fallen kann und dadurch beschädigt wird.

Erfindungsgemäß wird die Aufgabe dadurch gelöst, dass im Falle einer Kollision der Stoßfänger mitsamt Querträger, der mit einem Deformationselement, z.B. einer als Deformationsprofil ausgeführten Crashbox, an den Seitenwänden des Trägerelements befestigt ist, die Aufprallenergie zunächst über das Deformationselement absorbiert, dabei in den Motorraum eindringt und nach einer definierten Eindringtiefe im Bereich der Seitenwände des Trägerelements auf das Trägerelement selber trifft. Die Seitenwände der Trägerelemente weisen in diesem Bereich einen als Opferteil ausgebildeten Teilbereich auf, der im Kollisionsfall beim Überschreiten eines bestimmten Kraftwertes nach hinten aus dem Gefahrbereich verschoben wird. Da das Kühlmodul im Wesentlichen an diesen Opferteilen gelagert ist und ansonsten leicht lösbar am Trägerelement fixiert ist, wird es zusammen mit den Opferteilen im Motorraum nach hinten verschoben.

Um diesen Teilbereich verschiebbar zu gestalten, ist der Teilbereich über Sollbruchstellen mit der Seitenwand verbunden und bricht bei Einwirkung einer bestimmten äußeren Kraft heraus. Die Sollbruchstellen sind als Bruchkerben ausgebildet, die in Fahrtrichtung parallel oder sich nach hinten keilförmig öffnend über die gesamte Seitenwand verlaufen.

Bei einer vorteilhaften Ausführungsform ist die Seitenwand im Bereich des Opferteils geometrisch so ausgebildet, dass in Richtung des Querträgers die hintere Kontur des Querträgers nachgebildet wird; wodurch eine gleichmäßige Krafteinleitung in das Trägerelement gewährleistet wird. Dadurch, dass das Profil vorsteht, wird gleichzeitig verhindert, dass der Querträger bis zum Kühlmodul vordringen und dieses beschädigen kann. Die Befestigung oder Lagerung des Kühlmoduls am Opferteil bleibt auch nach dem Herausbrechen des Opferteils erhalten und das Kühlmodul wird ohne Schaden zu nehmen nach hinten aus dem Aufprallbereich herausgeschoben.

Neben der Lagerung im Bereich des Opferteils kann das Kühlmodul darüber hinaus an weiteren Stellen des Trägerelements fixiert sein. In einer vorteilhaften Ausführungsform ist das Kühlmodul zusätzlich oberhalb des Opferteils an den Seitenwänden mit Schieberverschlüssen fixiert, die im Falle einer Kollision leicht lösbar sind.

Die Kraftübertragung auf das Kühlmodul kann durch zusätzliche Rippen, die auf der rückwärtigen Seite des Opferteils neben der Lagerung für das Kühlmodul angebracht sind, optimiert werden.

Der Querträger ist über ein Deformationselement, das vorzugsweise in Längsrichtung verläuft und einen seitliche Befestigungsmöglichkeiten aufweist, mit den Seitenwänden oberhalb und unterhalb des Opferteils im hinteren Bereich der Seitenwand fest verbunden. Dabei fungiert das Deformationselement gleichzeitig als Halterung für das Unterteil des Trägerelements im Falle eines Crashs, wenn durch Herausbrechen des Opferteils die Verbindung zwischen Unter- und Oberteil des Trägerelements unterbrochen ist. Da das Deformationselement vorzugsweise in Längsrichtung angeordnet ist, kann es im Falle einer Kollision zusammengedrückt werden und dabei den größten Teil der Aufprallenergie absorbieren, bis der Querträger auf die Seitenwand trifft. Überschreitet nun die restliche Energie einen bestimmten Wert, so bricht das Opferteil heraus und die restliche Energie wird über die Opferteile auf das Kühlmodul gelenkt, das dabei, ohne Schaden zu nehmen, nach hinten verschoben wird.

Mit dem erfindungsgemäßen Frontendmodul gelingt es, den Stossfängerquerträger bei seinem Eindringen in den Motorraum aufzufangen, ohne dass dieser Bauteile im Frontbereich des Kraftfahrzeuges zerstören kann. Die erfindungsgemäße Ausbildung von Opferteilen in den Seitenwänden des Trägerelements erlaubt es, den Platz zwischen Motor und Kühlaggregat weiter zu reduzieren, ohne dabei Gefahr zu laufen, dass das Kühlmodul beim Versicherungscrash (16 km/h) beschädigt wird. Die Erfindung wird nachstehend anhand der in den Figuren dargestellten Ausführungsbeispiele erläutert. Dabei zeigen:
- Figur 1: eine schematische Darstellung der Vorderansicht des Frontendmoduls ohne Kühlmodul,
- Figur 2: eine schematische Darstellung der Rückansicht des Frontendmoduls ohne Kühlmodul,
- Figur 3: eine schematische Ansicht der Rückansicht des Frontendmoduls mit Kühlmodul,
- Figuren 4a und 4b: eine schematische Darstellung des Frontendmoduls ohne Querträger vor (4a) und nach einem Crash (4b),
- Figuren 5a und 5b: eine schematische Darstellung des Frontendmoduls mit Träger vor (5a) und nach einem Crash (5b),
- Figuren 6a und 6b: Eine Horizontal-Schnittdarstellung des Frontend- moduls in einer Ansicht von oben vor (6a) und nach einem Crash (6b),
- Figuren 7a und 7b: eine Veritkal-Schnittdarstellung des Frontendmo- duls in einer Betrachtungsrichtung von der Seite vor (7a) und nach dem Crash (7b),
- Figur 8: eine Detailansicht einer Seitenwand mit Querträ- ger,
- Figur 9: eine Detailansicht einer Seitenwand ohne Quer- träger,
- Figur 10: eine rückwärtige Detailansicht der Seitenwand ohne Kühlmodul und
- Figur 11: eine rückwärtige Detailansicht der Seitenwand mit Kühlmodul.

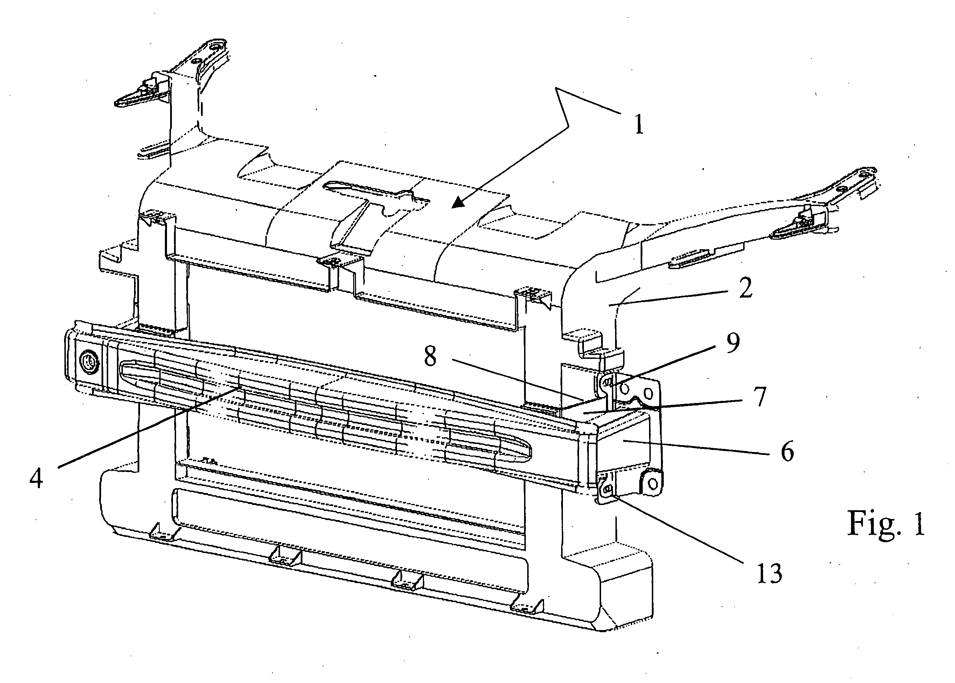

In der Figur 1 ist eine schematische Darstellung eines Frontendmoduls in der Vorderansicht zu sehen. Das Frontendmodul besteht im Wesentlichen aus einem Trägerelement 1, das zwei Seitenwände 2 umfasst. Vor dem Trägerelement 1 ist ein Querträger 4 für einen Stossfänger 5 angeordnet, der über eine Crashbox 6, die sich in Längsrichtung an der Außenseite der Seitenwand 2 erstreckt und mit einem seitlichen Flansch 9 im hinteren Bereich mit der Seitenwand 2 oberhalb und unterhalb eines Opferteils 7 verbunden ist. Das Opferteil 7 ist über eine Sollbruchstelle 8 mit dem Seitenteil 2 des Trägerelements 1 verbunden.

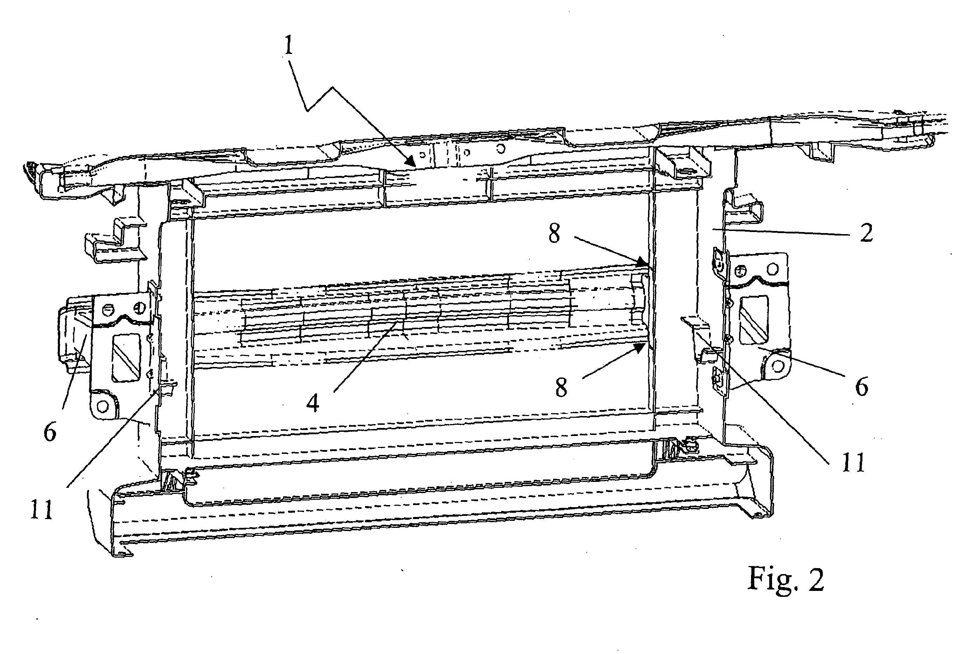

Die Figur 2 zeigt das Frontendmodul aus Figur 1 in einer rückwärtigen Ansicht. In dieser Ansicht ist die Sollbruchstelle 8, die in der vorliegenden Ausführungsform als Bruchkerbe 8 ausgeführt ist, nur in einem kleinen seitlichen Bereich der Seitenwand 2 zu erkennen, da die Bruchkerbe 8 nur einseitig auf der Seitenwand 2 ausgebildet ist. Als zusätzliches Element ist eine Lagerung 11 für das Kühlmodul 3 auf der Rückseite zu erkennen.

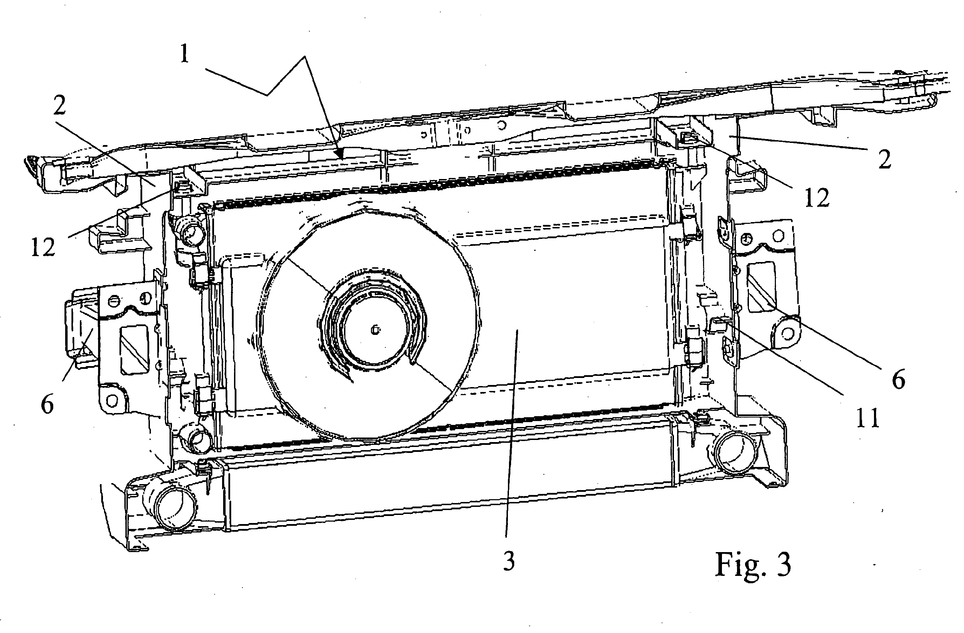

Die Figur 3 zeigt das Frontendmodul aus Figur 2 mit eingebautem Kühlmodul 3. Das Kühlmodul 3 ist im Bereich der Opferteile 7 in der Lagerung 11 gelagert. Zusätzlich ist das Kühlmodul oberhalb des Opferteils 7 mit Schieberverschlüssen 12 fixiert.

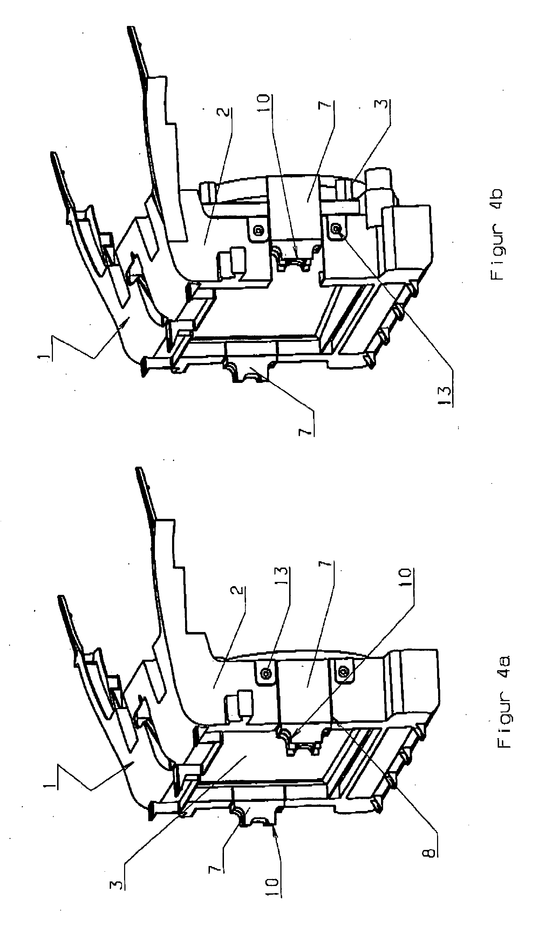

Die Figur 4a zeigt eine schematische Darstellung des Frontendmoduls mit eingebautem Kühler 3, jedoch ohne Querträger 4 im Betriebszustand. Die Seitenwand 2 weist in ihrer Mitte einen durch parallel verlaufende Bruchkerben abgetrennten Teilbereich (Opferteil 7) auf. Oberhalb und unterhalb dieses Opferteils 7 sind im hinteren Bereich der Seitenwand 2 Befestigungsstellen 13 für den seitlichen Flansch 9 der Crashbox 6 des Querträgers 4 zu erkennen. Die Bruchkerben 8 verlaufen parallel über die gesamte Seitenwand 2. Weiterhin erkennt man in dieser Darstellung das aus der Seitenwand 2 herausragende Profil 10 des Opferteils 7, das geometrisch so ausgebildet ist, dass es mit der rückwärtigen Kontur des Querträgers 4 korrespondiert. Die Figur 4b zeigt das Frontendmodul aus Figur 4a nach einem Crash auf der rechten Seite der Motorhaube. Das Opferteil 7 ist zusammen mit dem daran befestigten Kühlmodul 3 durch den Aufprall des Querträgers 4 nach hinten verschoben.

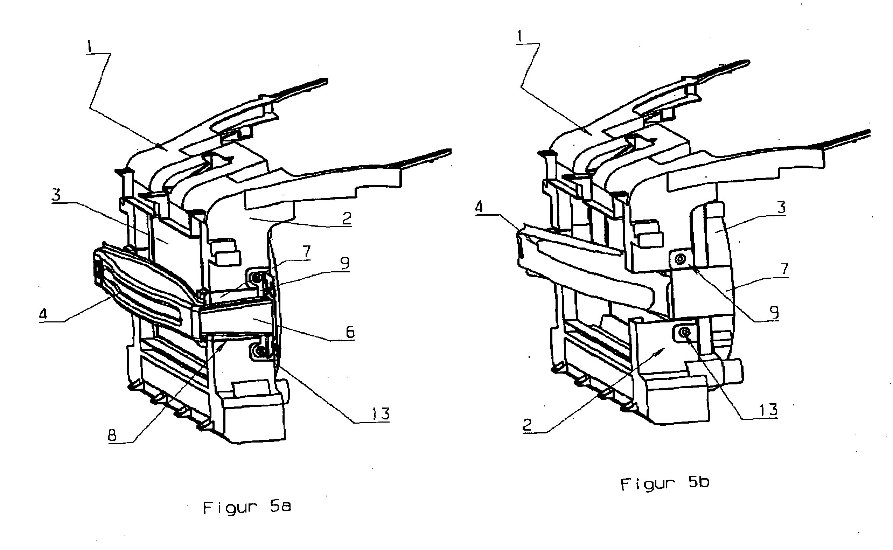

Die Figuren 5a und 5b zeigen das Frontendmodul aus den Figuren 4a und 4b mit dem Querträger 4. In der Figur 5b ist der Querträger 4 nach einem Crash auf der rechten Seite der Motorhaube in den Bereich der Seitenwand 3 des Trägerelements 1 hineingeschoben und hat dabei das Opferteil 7 zusammen mit dem Kühlmodul 3 nach hinten verschoben. Die Crashbox 6 ist nach der Kollision in sich zusammengedrückt, jedoch wird der Querträger 4 weiterhin mit den seitlichen Flanschen 9 an der Seitenwand 2 festgehalten.

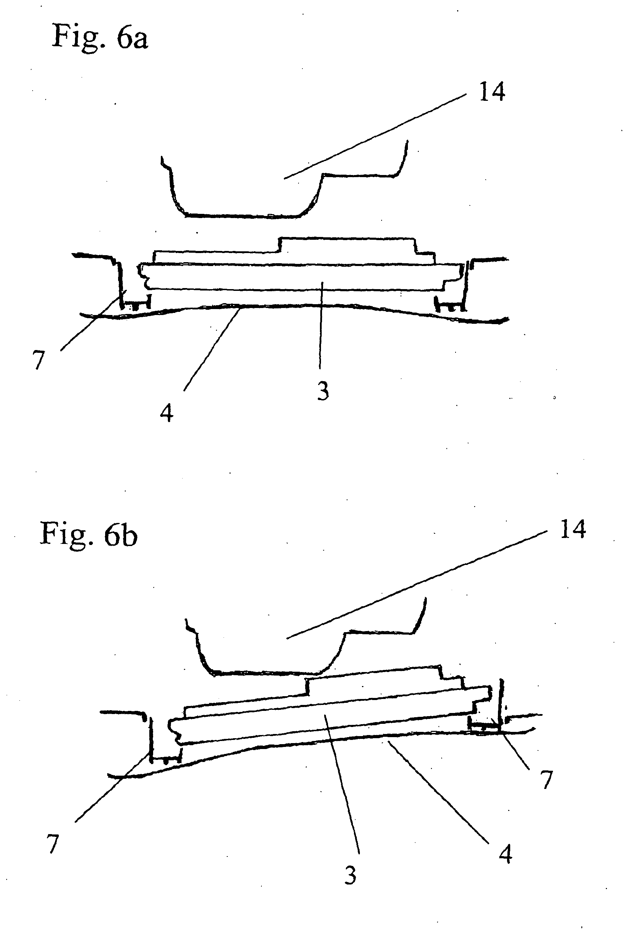

In den Figuren 6a und 6b ist in einer Schnittzeichnung in der Draufsicht die Situation vor und nach einem Crash zu sehen.

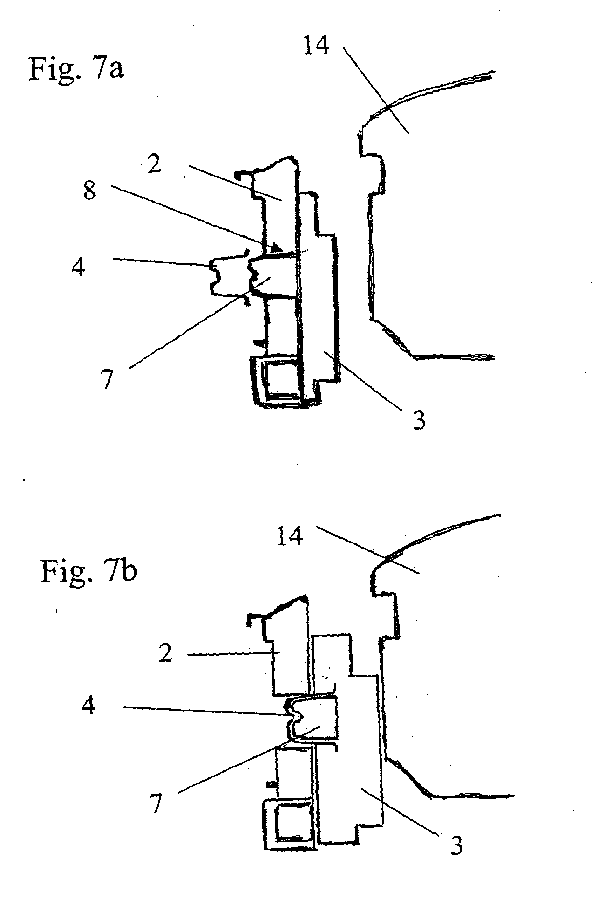

Ebenfalls ist in den Figuren 7a und 7b diesmal im Querschnitt die Situation vor und nach einem Crash zu sehen.

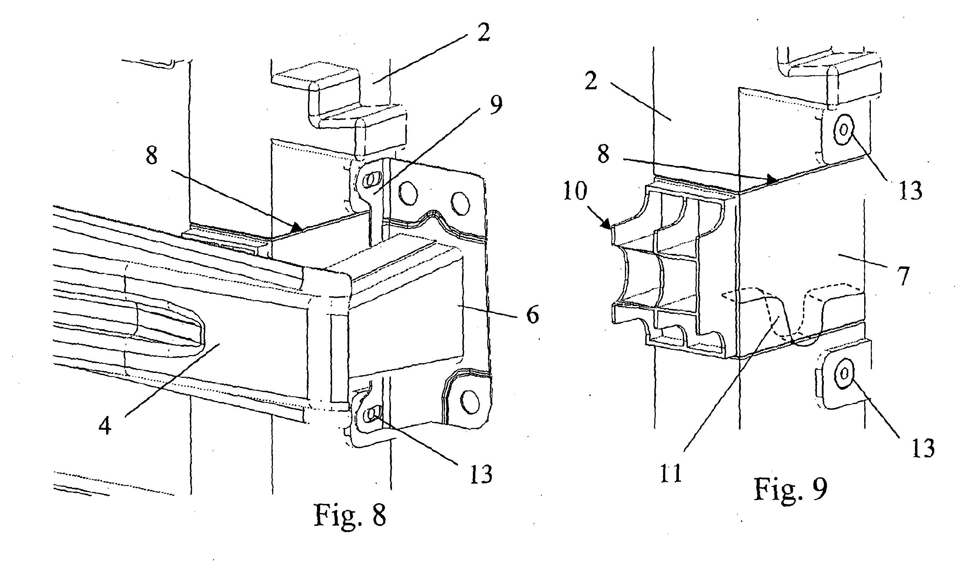

Die Figur 8 zeigt in einer Detailansicht die Befestigung des Querträgers 4 an der Seitenwand 2 des Trägerelements 1. Dabei ist der Querträger 4 über die in Längsrichtung verlaufende Crashbox 6, die einen seitlichen Flansch 9 aufweist, an den Befestigungsstellen 13 oberhalb und unterhalb des Opferteils 7 im hinteren Bereich der Seitenwand 2 mit den Trägerelement verbunden. Das Opferteil 7 selber ist über eine Bruchkerbe 8 mit der Seitenwand 2 verbunden.

Die Figur 9 zeigt die Detailansicht aus Figur 8 ohne den Querträger 4. Das Profil 10 des Opferteils 7 tritt nach vorne aus dem Bereich der Seite 2 heraus und ist geometrisch der rückwärtigen Kontur des Querträgers 4 nachgebildet. In einer Röntgensicht ist die Lagerung 11 für das Kühlmodul 3 auf der Rückseite der Seitenwand 2 zu erkennen.

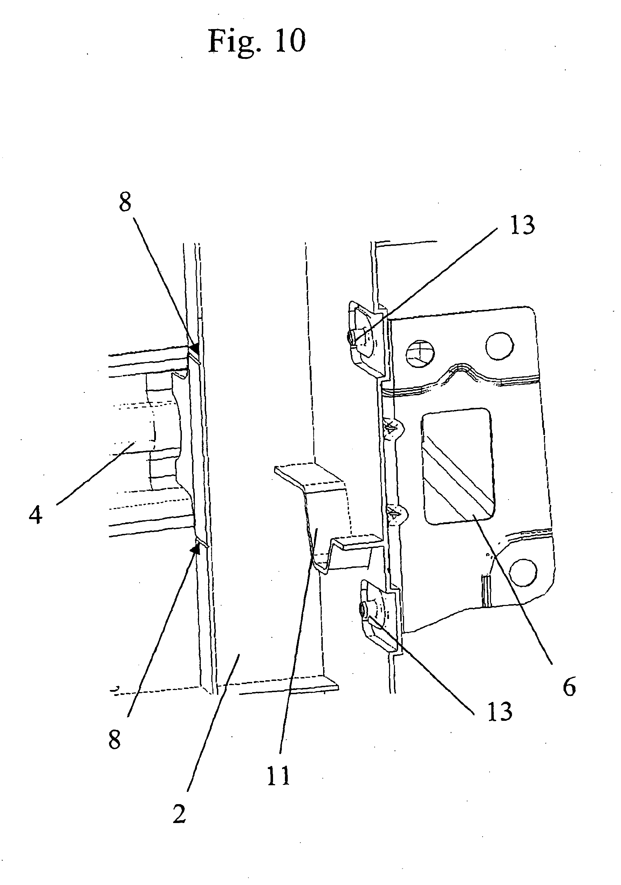

Figur 10 zeigt die Rückseite der Seitenwand 2 im Bereich des Opferteils 7 ohne Kühlmodul. Die Sollbruchstellen 8 sind als Bruchkerben 8 lediglich auf der Vorderseite der Seitenwand 2 ausgebildet und somit bei dieser Darstellung auf der Rückseite nicht zu erkennen.

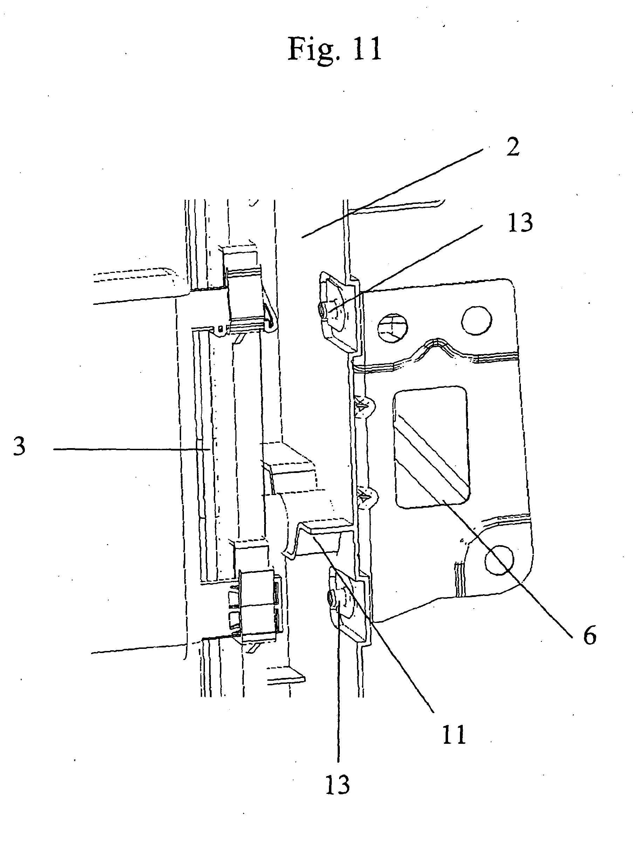

Figur 11 zeigt die Detailansicht aus Figur 10 mit eingebautem Kühlmodul.

Mit der vorliegenden Erfindung gelingt es, die Crashenergie eines Versicherungscrashs (16 km/h) zu absorbieren, ohne dass dabei das im Frontendmodul integrierte Kühlmodul beschädigt wird, selbst wenn auf Grund von immer kürzer werdenden Fahrzeugüberhängen und immer größerem Platzbedarf durch größere Motoren nur noch wenig Bauraum zur Energieabsorption zur Verfügung steht.

### Bezugszeichenliste

- 1: Trägerelement
- 2: Seitenwand
- 3: Kühlmodul
- 4: Querträger
- 5: Stossfänger
- 6: Deformationselement
- 7: Opferteil
- 8: Sollbruchstelle
- 9: seitlicher Flansch
- 10: Profil
- 11: Lagerung
- 12: Schieberverschluss
- 13: Befestigungsstelle
- 14: Motor

## Patentansprüche

1. Frontendmodul für ein Kraftfahrzeug mit
- einem Trägerelement (1) mit zwei beabstandet voneinander im Wesentlichen vertikal angeordneten Seitenwänden (2),
- einem Kühlmodul (3), das im Wesentlichen an den Seitenwänden (2) gelagert ist, und
- einem Querträger (4) als Teil eines Stoßfängersystems, wobei
- der Querträger (4) jeweils mit einem Deformationselement (6) versehen ist und an den Seitenwänden (2) befestigt ist,
- die Seitenwände (2) jeweils einen als Opferteil (7) ausgebildeten Teilbereich (7) aufweisen, der im Kollisionsfall vom Querträger (4) beaufschlagt gegenüber den Seitenwänden (2) verschiebbar ausgebildet ist, und
- das Kühlmodul (3) im Wesentlichen an den Opferteilen (7) gelagert ist,
**dadurch gekennzeichnet, dass** das Opferteil (7) über Sollbruchstellen (8) mit der Seitenwand (2) verbunden ist, wobei
die Sollbruchstellen (8) als Bruchkerben (8) ausgebildet sind, wobei
die Bruchkerben (8) in Fahrtrichtung parallel oder keilförmig, sich nach hinten öffnend über die gesamte Seitenwand (2) verlaufen.

2. Frontendmodul nach Anspruch 1, **dadurch gekennzeichnet, dass**
das Opferteil (7) auf gleicher Höhe mit dem Querträger (4) angeordnet ist.

3. Frontendmodul nach Anspruch 1 oder 2,
**dadurch gekennzeichnet, dass**
das Opferteil (7) in Fahrtrichtung ein Profil (10) aufweist, das mit der rückwärtigen Kontur des Querträgers (4) korrespondiert.

4. Frontendmodul nach einem der Ansprüche 1 bis 3,
**dadurch gekennzeichnet, dass**
das Opferteil (7) auf seiner rückwärtigen, zum Kühlermodul gerichteten Seite Abstützelemente zur Kraftübertragung auf die Kühlereinheit aufweist.

5. Frontendmodul nach einem der Ansprüche 1 bis 4,
**dadurch gekennzeichnet, dass**
das Deformationselement (6) in Form einer Crashbox (6) in Längsrichtung verläuft und einen seitlichen Flansch (9) aufweist, mit dem der Querträger (4) an den Seitenwänden (2) jeweils oberhalb und unterhalb des Opferteils (7) befestigt ist.

6. Frontendmodul nach einem der Ansprüche 1 bis 5,
**dadurch gekennzeichnet, dass**
das Kühlmodul (3) zusätzlich zu den Lagerungen (11) an mindestens einer weiteren Stelle des Trägerelements (1) fixiert ist.

7. Frontendmodul nach einem der Ansprüche 1 bis 6,
**dadurch gekennzeichnet, dass**
das Kühlmodul (3) oberhalb des Opferteils (7) an den Seitenwänden (2) mit jeweils einem Schieberverschluss (12) im Kollisionsfall lösbar fixiert ist.

8. Fahrzeug mit einem Frontendmodul nach einem der Ansprüche 1 bis 7.

## Claims

1. A front-end module for a motor vehicle, comprising
- a carrier element (1) having two lateral walls (2) which are disposed essentially vertically at a distance from each other,
- a cooling module (3) supported essentially on the lateral walls (2), and
- a transverse beam (4) as part of a bumper system, wherein
- the transverse beam (4) is provided in each case with a deformation element (6) and is fixed to the lateral walls (2),
- the lateral walls (2) each have a part section (7) formed as a sacrificial part (7), which is designed in such a way that it slides relative to the lateral walls (2) as a response to being acted upon by the transverse beam (4) in the case of a collision, and
- the cooling module (3) is essentially supported on the sacrificial parts (7),
**characterised in that** the sacrificial (7) part is connected to the lateral wall (2) via predetermined breaking points (8), wherein
the predetermined breaking points (8) are formed as breaking notches (8), wherein
the breaking notches extend parallel or in a V shape in the driving direction and are open towards the rear across the entire lateral wall (2).

2. The front-end module as claimed in Claim 1, **characterised in that** the sacrificial part (7) is positioned at the same level as the transverse beam (4).

3. The front-end module as claimed in Claim 1 or 2, **characterised in that** the sacrificial part (7) has a profile (10) in the driving direction, which corresponds to the rearward contour of the transverse beam (4).

4. The front-end module as claimed in any one of Claims 1 to 3, **characterised in that** the sacrificial part (7) has supporting elements on its rearward side facing the cooler module, which are designed to transmit power to the cooling unit.

5. The front-end module as claimed in any one of Claims 1 to 4, **characterised in that** the deformation element (6) extends in the longitudinal direction in the form of a crash box (6) and has a lateral flange (9) by means of which the transverse beam (4) is fixed to the lateral walls (2) respectively above and below the sacrificial part (7).

6. The front-end module as claimed in any one of Claims 1 to 5, **characterised in that** in addition to the supports (11), the cooling module (3) is fixed to at least one further location of the carrier element (1).

7. The front-end module as claimed in any one of Claims 1 to 6, **characterised in that** the cooling module (3) is fixed to the lateral walls (2) above the sacrificial part (7) by means of one sliding closure (12), respectively, in such a way that it is detachable in the case of a collision.

8. A vehicle having a front-end module as claimed in any one of Claims 1 to 7.

## Revendications

1. Module frontal de véhicule automobile comportant :
- un élément de support (1) ayant deux parois latérales (2) écartées l'une de l'autre et installées pratiquement dans la direction verticale,
- un module de refroidissement (3) monté principalement sur les parois latérales (2), et
- une traverse (4) faisant partie d'un système de pare-chocs, module dans lequel
- la traverse (4) est munie respectivement d'un élément de déformation (6), et elle est fixée aux parois latérales (2),
- les parois latérales (2) ont chacune une zone partielle (7) réalisée sous la forme d'une pièce sacrifiée (7) qui, en cas de collision, est sollicitée par la traverse (4) pour coulisser par rapport aux parois latérales (2), et
- le module de refroidissement (3) est principalement monté sur les pièces sacrifiées (7),
**caractérisé en ce que**
la pièce sacrifiée (7) est reliée à la paroi latérale (2) par des points de rupture de consigne (8), et
les points de rupture de consigne (8) sont réalisés sous la forme d'encoches de rupture (8), et
les encoches de rupture (8) sont parallèles à la direction de déplacement ou en forme de coin s'ouvrant vers l'arrière et s'étendant sur toute la paroi latérale (2).

2. Module frontal selon la revendication 1,
**caractérisé en ce que**
la pièce sacrifiée (7) se situe à la même hauteur que la traverse (4).

3. Module frontal selon la revendication 1 ou 2,
**caractérisé en ce que**
la pièce sacrifiée (7) présente un profil (10) dans la direction de déplacement qui correspond au contour arrière de la traverse (4).

4. Module frontal selon les revendications 1 à 3,
**caractérisé en ce que**
la pièce sacrifiée (7) comporte des éléments d'appui sur son côté arrière tourné vers le module de refroidissement pour transmettre les efforts à l'unité de refroidissement.

5. Module frontal selon les revendications 1 à 4,
**caractérisé en ce que**
l'élément de déformation (6) a la forme d'une boîte d'écrasement (6) dans la direction longitudinale avec une bride latérale (9) par laquelle, la traverse (4) est fixée aux parois latérales (2) chaque fois au-dessus et en dessous de la pièce sacrifiée (7).

6. Module frontal selon les revendications 1 à 5,
**caractérisé en ce qu'**
en plus des appuis (11), le module de refroidissement (3) est fixé à au moins un autre endroit de l'élément de support (1).

7. Module frontal selon les revendications 1 à 6,
**caractérisé en ce que**
le module de refroidissement (3) est fixé de manière amovible, en cas de collision, aux parois latérales (2), au-dessus de la pièce sacrifiée (7) avec chaque fois une liaison de coulissement (12).

8. Véhicule équipé d'un module frontal selon les revendications 1 à 7.
